# FASCICULE DE BREVET EUROPEEN

(11) **EP 1 877 748 B1**
(45) Date de publication et mention de la délivrance du brevet: **04.08.2010**
(21) Numéro de dépôt: 06764592.9
(22) Date de dépôt: 03.05.2006
(51) Int. Cl.: G01L 5/16

(54) **DISPOSITIF DE MESURE DE FORCE A TIGE RIGIDE**
KRAFTMESSVORRICHTUNG MIT STARREM SCHAFT
FORCE MEASURING DEVICE HAVING A RIGID STEM

(30) Priorité: 04.05.2005 FR 0504564
(43) Date de publication de la demande: 16.01.2008
(73) Titulaire: Commissariat à l'Énergie Atomique et aux Énergies Alternatives, 75015 Paris (FR)
(72) Inventeur: ROBERT, Philippe, F-38100 Grenoble (FR); REY, Patrice, F-38430 St. Jean de Moirans (FR)
(74) Mandataire: Stankoff, Hélène
(86) Numéro de dépôt international: PCT/FR2006/000996
(87) Numéro de publication internationale: WO 2006/117480

(56) Documents cités:
- EP-A- 0 549 807
- WO-A-00/23778
- US-A- 5 864 056
- US-A1- 2003 056 579

## Description

La présente invention concerne un dispositif de mesure de force.

De manière générale, la présente invention concerne un dispositif de mesure de force comprenant une tige rigide reliée à une membrane sensiblement plane déformable comportant des moyens de détection d'une déformation de cette membrane.

Elle vise le domaine d'un capteur de tout type de force (force, pression, force de traction, moment ou accélération angulaire ou linéaire), qui peut être intégré dans tout système où l'on cherche à mesurer une force (pneumatique, manette de commande ou joystick pour jeux vidéos, ...) ou une accélération (déclenchement d'air bag dans une automobile, pacemaker,...).

Un tel capteur de force est notamment décrit dans le document US 6 666 079.

La tige rigide du dispositif de mesure de force comporte au moins une portion, ou l'intégralité de la tige, adaptée à être en contact avec un élément apte à être sollicité par la force à mesurer.

La tige permet ainsi de transmettre l'effort appliqué à l'élément à la membrane déformable, dont la déformation est proportionnelle à l'effort à mesurer.

La présente invention a pour but de permettre une transmission efficace des efforts à mesurer.

A cet effet, la présente invention vise un dispositif de mesure de force comprenant une tige rigide reliée à une membrane sensiblement plane déformable comportant des moyens de détection d'une déformation de la membrane, la tige comportant au moins une portion adaptée à être en contact avec un élément apte à être sollicité par la force.

Selon l'invention, la portion de tige comporte des créneaux formant moyens d'ancrage adaptés à coopérer avec ledit élément.

Ainsi, contrairement à l'état de la technique où la tige du capteur a généralement une forme cylindrique lisse, les créneaux présents sur au moins une partie de la surface de la tige permettent d'améliorer l'adhérence de la tige avec l'élément en contact.

Cette adhérence ou ancrage amélioré permet d'obtenir une transmission efficace des efforts, notamment lorsque la force à laquelle est soumis l'élément est une force de traction qui tend à séparer l'élément du dispositif de mesure de force ainsi que dans le cas de sollicitations répétitives.

On évite ainsi la création d'amorce dans l'élément en contact avec le capteur, pouvant entraîner des erreurs dans la mesure des efforts appliqués et éventuellement la destruction partielle ou totale de l'élément coopérant avec la tige du dispositif de mesure de force.

Selon un mode de réalisation de l'invention, les créneaux sont perpendiculaires à la membrane, permettant ainsi d'améliorer la transmission d'une force tangentielle à la tige rigide.

Alternativement ou de manière complémentaire, les créneaux sont parallèles à la membrane, permettant d'améliorer la transmission d'une force normale, s'étendant dans l'axe de la tige.

En variante, les moyens d'ancrage sont formés par une portion élargie de la tige permettant ainsi d'augmenter la surface de contact entre la tige et l'élément sollicité par une force.

La présente invention est mise en oeuvre de manière avantageuse lorsque la portion de tige est adaptée à être noyée dans ledit élément sollicité par la force, ou encore lorsque la portion de tige est adaptée à être emboîtée dans cet élément.

D'autres particularités et avantages de l'invention apparaîtront encore dans la description ci-après.

Aux dessins annexés, donnés à titre d'exemples non limitatifs :
- la figure 1 est une vue schématique en coupe transversale d'un dispositif de mesure de force conforme à un premier mode de réalisation de l'invention ;
- la figure 2A est une vue de dessous d'un dispositif de mesure de force de la figure 1 ;
- la figure 2B est une vue de dessous d'un mode de réalisation alternatif d'un dispositif de mesure de force de la figure 1 ;
- la figure 3 est une vue schématique en coupe transversale d'un dispositif de mesure de force conforme à un deuxième mode de réalisation de l'invention ;
- la figure 4 est une vue de dessous du dispositif de mesure de force de la figure 3 ;
- la figure 5 est une vue schématique en coupe transversale d'un dispositif de mesure de force conforme à un troisième mode de réalisation de l'invention ;
- la figure 6 est une vue schématique en coupe transversale d'un dispositif de mesure de force conforme à un quatrième mode de réalisation de l'invention ;
- la figure 7 est une vue schématique en coupe transversale d'un dispositif de mesure de force conforme à un cinquième mode de réalisation de l'invention ;
- la figure 8 est une vue schématique en coupe transversale d'un dispositif de mesure de force conforme à un sixième mode de réalisation de l'invention ;
- la figure 9 est une vue schématique en coupe transversale d'un dispositif de mesure de force conforme à un septième mode de réalisation de l'invention ;
- la figure 10 est une vue de dessous du dispositif de mesure de force de la figure 9 ;
- les figures 11a à 11k sont des schémas illustrant la succession des étapes d'une méthode de fabrication d'un dispositif de mesure conforme à l'invention ; et
- les figures 12a à 12k sont des schémas illustrant les étapes d'une méthode de fabrication d'un dispositif de mesure conforme à un autre mode de réalisation de l'invention.

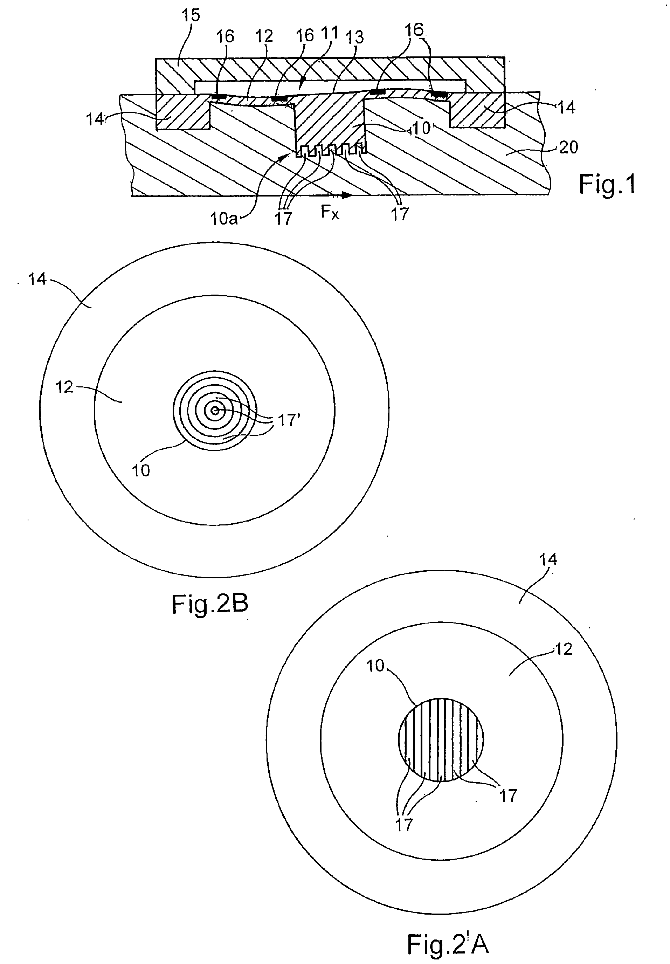

On va décrire tout d'abord en référence aux figures 1 et 2A un premier mode de réalisation d'un dispositif de mesure de force conforme à l'invention.

Le capteur de force illustré a une structure particulière du type "clou". Il comporte une tige rigide 10 surmontée d'une tête 11.

Cette tête 11 comporte une membrane déformable et sensiblement plane 12 capable de se déformer lorsque la tige rigide 10, reliée ici au centre de la membrane, est sollicitée par une force ou un moment ou encore lorsque la structure complète du dispositif de mesure est sollicitée par une accélération, la tige formant alors une masse sismique.

Dans cet exemple de réalisation, la membrane déformable 12 est une membrane circulaire pleine, sa liaison avec la tige 10 étant réalisée dans une zone centrale 13.

Bien entendu, cette membrane déformable 12 pourrait être de structure différente, et par exemple pourrait être réalisée à partir de différents bras s'étendant de la zone centrale 13 jusqu'à une zone périphérique 14 de la membrane.

Cette zone périphérique 14 comporte des points d'ancrage qui possèdent une position stable par rapport à la tige 10, que la membrane 12 soit déformée ou non. Il existe une multitude de points d'ancrage continus dans cet exemple, s'étendant sur la zone périphérique 14 de la membrane 12.

Un capot 15 est également prévu pour recouvrir à distance la membrane 12, du côté d'une face opposée à celle portant la tige rigide 10.

Cette membrane déformable 12 comporte en outre des moyens de détection de sa déformation, par exemple constituée de jauges piézorésistives 16 alignées suivant différentes directions dans le plan de la membrane.

Ces moyens de détection peuvent ainsi comprendre huit jauges piézorésistives montées quatre par quatre en double pont de Wheastone, alignées suivant deux directions perpendiculaires dans le plan de la membrane déformable 12.

Le déséquilibre mesuré aux bornes des ponts de Wheastone est directement proportionnel à la déformation de la membrane dans la direction associée au pont de Wheastone.

Pour la détection de la déformation de la membrane et la mesure de force associée à ce dispositif, on se reportera avantageusement à la description du document US 6 666 079.

Dans ce mode de réalisation de la présente invention, une portion de tige, correspondant ici à l'extrémité libre 10a de la tige 10, est structurée par des moyens d'ancrage 17.

Ces moyens d'ancrage 17 comprennent ici des créneaux 17 perpendiculaires au plan de la membrane 12.

Comme bien illustré sur la figure 2A, ces créneaux sont rectilignes et s'étendent parallèlement les uns aux autres dans un plan correspondant à la face terminale de l'extrémité libre 10a de la tige 10.

Ces créneaux perpendiculaires à la membrane 12 débouchent ainsi à l'extrémité libre 10a de la tige 10. Ils forment ainsi des gorges de section transversale carrée ou rectangulaire qui sont ouvertes dans la face terminale de l'extrémité libre 10a de la tige.

Dans ce mode de réalisation, où au moins l'extrémité libre 10a de la tige est adaptée à être noyée dans un élément 20, ces créneaux 17 permettent d'améliorer l'ancrage dans cet élément 20 de la tige 10.

La figure 1 illustre le dispositif de mesure de force dans lequel l'intégralité du dispositif, c'est-à-dire la tête 11 et la tige 10 du capteur sont noyées dans la matière de l'élément 20. Sur cette figure 1, l'élément 20 est sollicité par une force tangentielle Fₓ par rapport à l'axe de la tige 10.

L'effort auquel est soumis l'élément 20 peut ainsi être transmis d'une manière parfaite à la tige 10 grâce à l'adhérence et à l'ancrage amélioré par la présence des créneaux 17. Ces créneaux 17 s'étendant perpendiculairement au plan de la membrane 12, l'ancrage est particulièrement amélioré lorsque la force appliquée à l'élément 20 s'étend dans le plan de cette membrane 12.

Ces créneaux pourraient avoir une forme différente. Ainsi, comme illustré à la figure 2B, les créneaux 17' peuvent être des cercles concentriques débouchant dans une face, ici la face terminale, de l'extrémité libre 10a de la tige 10.

La profondeur des créneaux 17, 17' ne doit pas fragiliser la tige qui doit rester rigide sous l'action des efforts appliqués. Ici, une profondeur de l'ordre du quart de la longueur de la tige 10 est une valeur correcte.

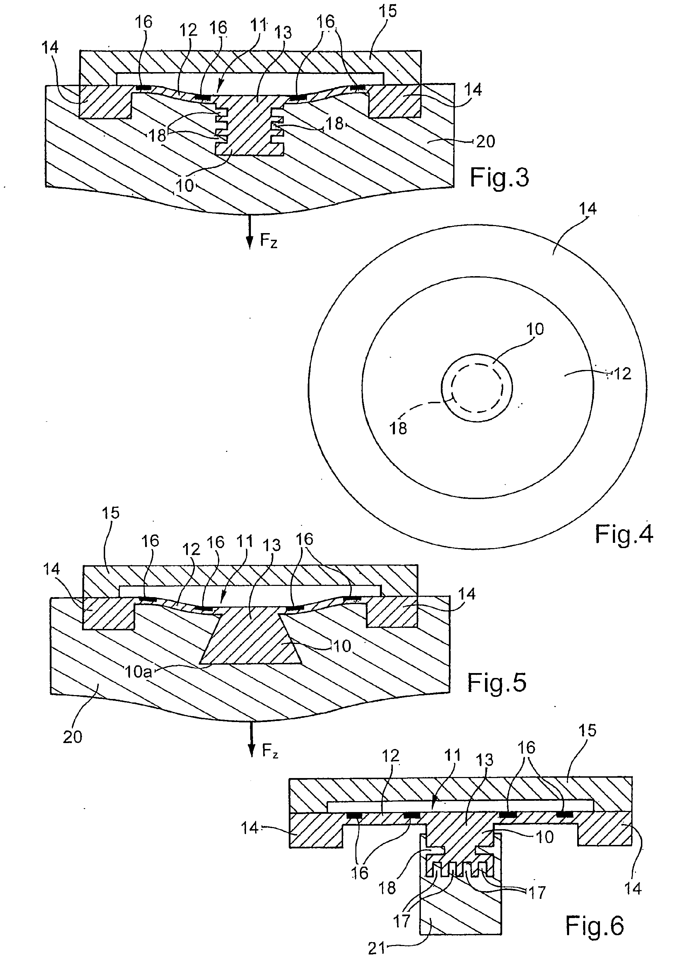

On va décrire à présent en référence aux figures 3 et 4 un deuxième mode de réalisation de l'invention.

Les éléments identiques au mode de réalisation décrit précédemment, et portant les mêmes références numériques, ne seront pas redécrits en détail ici.

Dans ce mode de réalisation, la tige 10 comporte dans sa hauteur des moyens d'ancrage 18 qui sont formés de créneaux parallèles au plan de la membrane au repos.

Comme bien illustré à la figure 4, ces créneaux sont annulaires et débouchent sur le pourtour de la tige rigide cylindrique 10. Dans ce mode de réalisation, trois créneaux circulaires 18 sont superposés dans l'axe longitudinal de la tige 10.

Ces créneaux 18 sont formés de gorges annulaires de section transversale carrée ou rectangulaire dont un côté est ouvert dans la paroi longitudinale de la tige 10.

Bien entendu, un seul créneau pourrait être réalisé dans le corps de la tige 10, ou encore un nombre égal à deux ou supérieur à trois.

Les créneaux 18 débouchant ainsi dans la paroi longitudinale de la tige 10, ces moyens d'ancrage sont particulièrement bien adaptés à transmettre un effort à la membrane 12 lorsque la force de sollicitation F_{z} de la tige 10 est normale, c'est-à-dire dans l'axe de la tige 10, perpendiculairement à la membrane 12.

Ici aussi, la profondeur des créneaux dans l'épaisseur de la tige ne doit pas fragiliser celle-ci.

On a illustré sur la figure 3 le capteur noyé dans un élément 20, celui-ci étant sollicité par une force F_{z} de traction tendant à séparer l'élément 20 de la tige 10.

Grâce à la présence des créneaux 18, l'ancrage de la tige 10 dans l'élément 20 est amélioré.

On va décrire à présent un troisième mode de réalisation en référence à la figure 5, les éléments communs aux modes de réalisation précédents portant les mêmes références numériques.

Dans ce mode de réalisation, la tige est structurée de telle sorte que les moyens d'ancrage sont formés par une portion élargie de la tige 10.

Cette portion élargie a ici une forme de tronc de cône, la base élargie du tronc de cône constituant une extrémité libre 10a de la tige 10.

Dans ce mode de réalisation où le capteur est noyé dans un élément 20, lorsque la force de sollicitation F_{z} est perpendiculaire à la membrane 12, cette portion élargie de l'extrémité libre 10a de la tige permet d'assurer un ancrage mécanique favorable à la transmission de l'effort à la membrane 12.

Bien entendu, dans les modes de réalisation précédents, on a illustré un capteur noyé intégralement dans un élément 20, par exemple en matériau souple type caoutchouc.

Bien entendu, seule la tige 10, ou encore l'extrémité libre 10a de la tige 10 pourrait être noyée dans l'élément 20.

On va décrire à présent en référence à la figure 6 un quatrième mode de réalisation, les éléments communs aux modes de réalisation précédents portant les mêmes références numériques.

Dans ce mode de réalisation, la tige 10 comprend des moyens d'ancrage constitués à la fois de créneaux 17 perpendiculaires à la membrane 12 et de créneaux 18 parallèles à la membrane 12.

Ici, ce dispositif de mesure de force comprend des créneaux 17 débouchant dans la paroi d'extrémité libre 10a de la tige 10 et un créneau 18 débouchant dans la paroi longitudinale de la tige 10.

On peut ainsi combiner les deux types de créneaux décrits précédemment en référence au premier et au deuxième modes de réalisation de l'invention.

Ce mode de réalisation est particulièrement bien adapté lorsque la tige 10 coopère avec un élément rigide 21 de transmission, semblable à une tige. On peut rencontrer un tel montage du dispositif de mesure de force notamment dans une manette de commande de jeu, du type joystick.

Bien entendu, les modes de réalisation décrits précédemment peuvent être combinés.

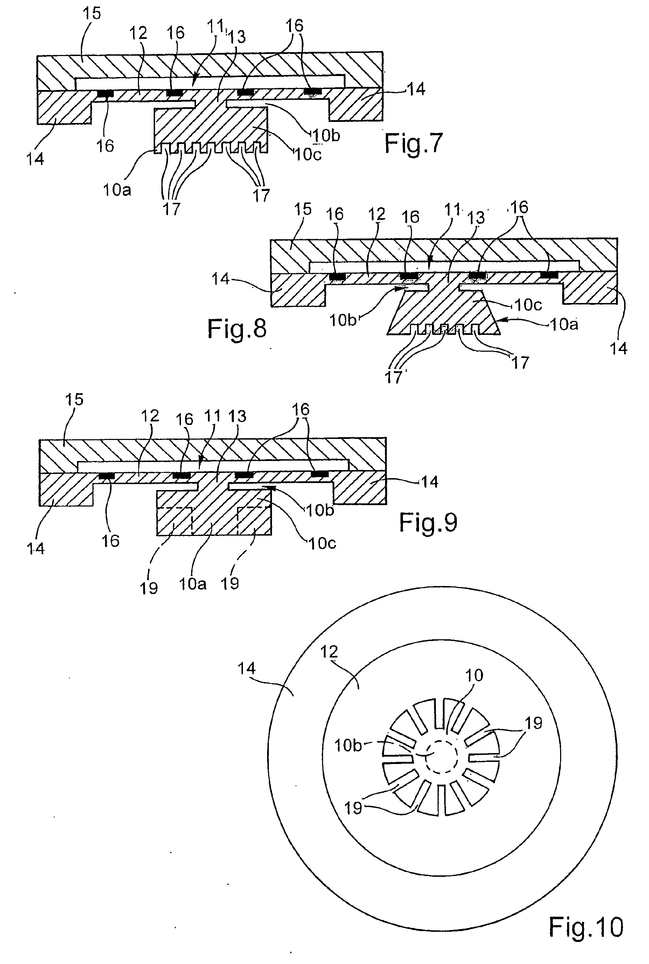

En particulier, comme bien illustré à la figure 7 dans un quatrième mode de réalisation, la tige 10 peut à la fois présenter une portion élargie 10c et des créneaux 17 s'étendant perpendiculairement au plan de la membrane 12.

Ainsi, la tige 10 présente dans ce mode de réalisation une première partie 10b de diamètre rétréci reliée à la zone centrale 13 de la membrane 12. Cette portion rétrécie 10b est ensuite prolongée par une partie 10c de diamètre élargi, permettant d'assurer un meilleur ancrage de la tige 10 dans un élément sollicité par une force.

Ces deux parties 10b, 10c de tige sont ici cylindriques et coaxiales.

De manière alternative, comme illustré dans un sixième mode de réalisation à la figure 8, la portion élargie 10c de la tige peut également avoir une forme tronconique comme décrit précédemment en référence à la figure 5.

Elle est reliée par une portion 10b de diamètre rétréci à la zone centrale 13 de la membrane 12.

Une telle structure permet d'améliorer à la fois la transmission des forces tangentielles et perpendiculaires par rapport au plan de la membrane déformable 12.

On va décrire à présent en référence aux figures 9 et 10 un septième mode de réalisation de l'invention.

Comme dans les modes de réalisation décrits en référence à la figure 7, la tige 10 présente une portion élargie 10c rattachée par une portion de diamètre rétréci 10b à la zone centrale 13 de la membrane 12.

En outre, l'extrémité libre 10a comprend des créneaux 19 bien illustrés sur la figure 10 qui débouchent à la fois dans une paroi longitudinale de la tige 10, et dans la face terminale de l'extrémité libre 10a de la tige 10.

Ces créneaux 19 sont de préférence répartis symétriquement par rapport à l'axe central longitudinal de la tige, et ici répartis régulièrement sur le pourtour de la tige cylindrique 10.

Ces moyens d'ancrage 19 permettent d'améliorer non seulement la transmission des forces tangentielles mais aussi la transmission d'un moment auquel est soumis la tige 10.

Bien entendu, les modes de réalisation décrits précédemment ne sont nullement limitatifs et ils peuvent être combinés les uns aux autres pour améliorer l'ancrage de la tige 10 dans un élément sollicité par une force à mesurer.

Par ailleurs, le nombre et la forme des créneaux 17, 17', 18, 19 ne sont nullement limitatifs.

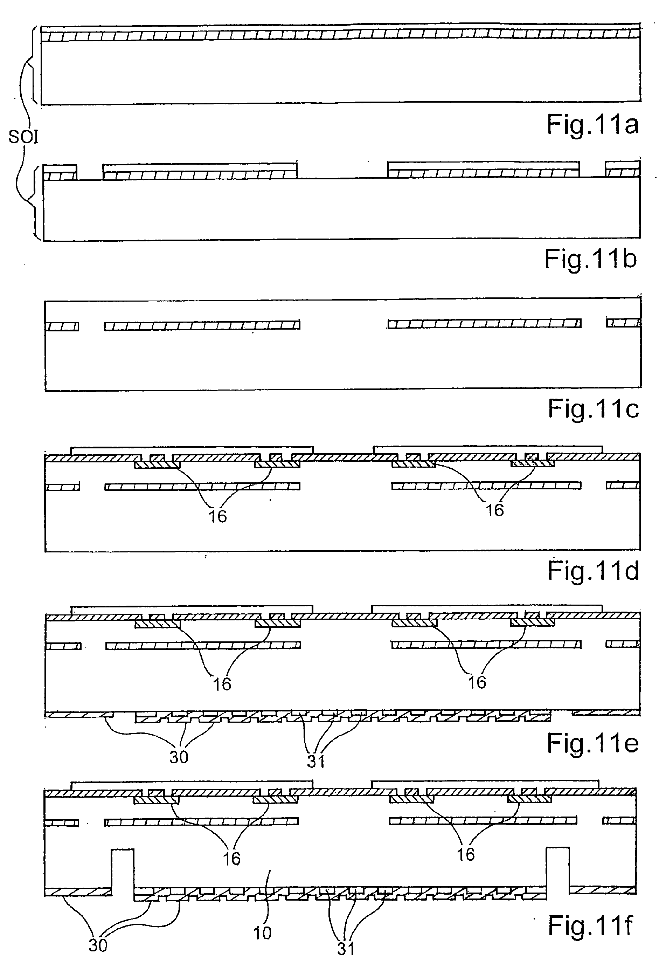

On va décrire à présent en référence aux figures 11a à 11k un premier procédé de fabrication permettant de réaliser des créneaux perpendiculaires à la membrane 12.

Le procédé de fabrication décrit ici utilise des techniques de micro technologie.

A partir d'un substrat SOI (Silicium sur isolant) tel qu'illustré à la figure 11a, on réalise tout d'abord la gravure des couches superficielles comme illustré à la figure 11b.

Une épitaxie est ensuite mise en oeuvre telle qu'illustrée à la figure 11c.

Cette étape consiste à faire croître une couche de silicium monocristallin à partir du silicium superficiel monocristallin du substrat SOI.

On réalise ensuite comme illustré à la figure 11d, sur une face supérieure du substrat, l'implantation des jauges résistives formant moyens de détection et des différents conducteurs permettant de réaliser la connexion et le montage des jauges en pont de Wheastone.

Comme illustré à la figure 11e, un double masque 30, 31 est ensuite réalisé sur la face inférieure du substrat.

Une première gravure profonde telle qu'illustré à la figure 11f permet d'amorcer la réalisation de la tige 10.

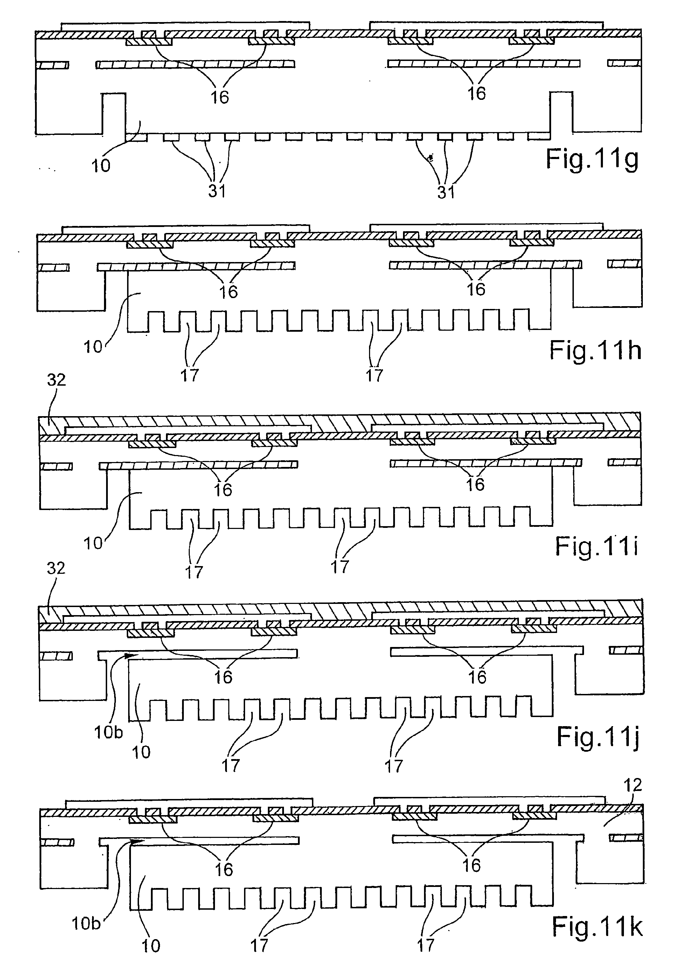

Comme illustré à la figure 11g, le premier masque 30 est ensuite éliminé, le second masque 31 restant présent permettant de délimiter une série de créneaux débouchant sur l'extrémité libre de la tige 10 en cours de formation.

Ici, ce second masque 31 forme une série de bandes parallèles espacées les unes des autres d'un pas régulier.

Comme illustré à la figure 11h, une deuxième gravure profonde est réalisée puis le second masque 31 est également éliminé. Les créneaux 17 sont ainsi formés.

A la figure 11i, une protection 32 de la face supérieure portant les moyens de détection et les conducteurs est mise en place.

Puis, comme illustré à la figure 11j, une gravure de la couche d'oxyde sacrifiée du substrat SOI est réalisée afin d'obtenir la portion 10b de diamètre rétréci de la tige 10.

Enfin, la protection 32 de la face supérieure est retirée comme illustré à la figure 11k.

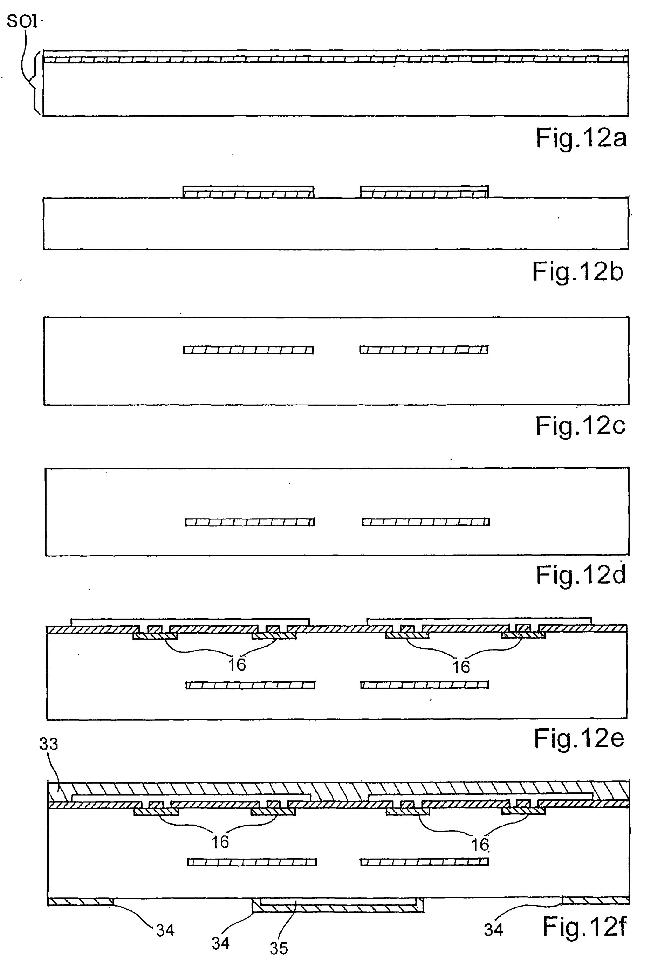

On va décrire à présent en référence aux figures 12a à 12k, un deuxième procédé de fabrication d'un dispositif de mesure de force conforme à l'invention dans lequel la tige comporte un créneau s'étendant parallèlement au plan de la membrane 12.

Comme précédemment, on met en oeuvre des techniques de micro technologie.

A partir d'un substrat SOI tel qu'illustré à la figure 12a, on réalise la gravure des couches superficielles comme illustré à la figure 12b puis une épitaxie telle qu'illustré à la figure 12c.

Dans ce procédé de fabrication, on inverse les faces du substrat comme illustré à la figure 12d, la face supérieure devenant la face inférieure et vice-versa.

Ensuite, comme illustré à la figure 12e, on réalise de manière connue les moyens de détection 16 et la connexion électrique de ces moyens de détection 16 sur une face supérieure du substrat.

On réalise ensuite tel qu'illustré à la figure 12f à la fois une protection 33 de la face supérieure du substrat, par exemple à l'aide d'une résine, puis un double masque 34, 35 sur la face inférieure du substrat. Ce double masque peut être réalisé à l'aide d'un oxyde placé sous une résine.

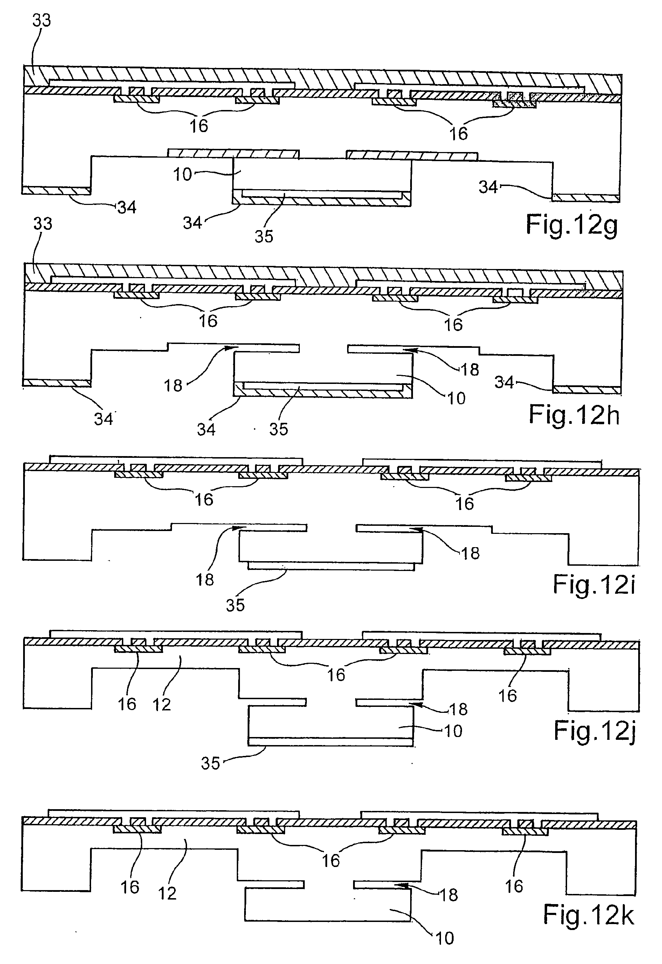

Une première gravure profonde permet d'amorcer la structure de la tige 10 du capteur tel qu'illustré à la figure 12g.

Comme illustré à la figure 12h, une gravure humide de la face inférieure du substrat permet de graver la couche d'oxyde sacrifiée de manière à réaliser un créneau 18 s'étendant parallèlement au plan de la membrane.

On élimine ensuite le premier masque 34 à base de résine ainsi que la protection 33 de la face supérieure du substrat comme illustré à la figure 12i.

Une deuxième gravure profonde est réalisée comme illustré à la figure 12j de manière à réaliser à la fois le plan de la membrane 12 et le corps de la tige 10 au niveau de sa jonction avec la membrane 12.

Enfin, comme illustré à la figure 12k, le deuxième masque à base d'oxyde est éliminé.

Bien entendu, les procédés de fabrication décrits précédemment ne sont donnés qu'à titre d'exemples non limitatifs.

En particulier, d'autres techniques plus conventionnelles pourraient être mises en oeuvre pour réaliser un dispositif de mesure de force conforme à l'invention.

En particulier, les différentes parties de la structure pourraient être réalisées par usinage classique, puis assemblées.

Par ailleurs, le dispositif de mesure de force peut être monté différemment sur l'élément sollicité par une force et, en particulier, un espace libre peut exister entre l'élément sollicité et la membrane déformable du dispositif.

## Revendications

1. Dispositif de mesure de force comprenant une tige rigide (10) reliée à une membrane (12) sensiblement plane déformable comportant des moyens de détection (16) d'une déformation de ladite membrane (12), la tige comportant au moins une portion adaptée à être en contact avec un élément (20, 21) apte à être sollicité par ladite force (F), **caractérisé en ce que** ladite portion de tige (10) comporte des créneaux formant moyens d'ancrage (17, 17', 18, 19) adaptés à coopérer avec ledit élément (20, 21).

2. Dispositif de mesure de force conforme à la revendication 1, **caractérisé en ce que** les créneaux (17, 17') sont perpendiculaires à la membrane (12).

3. Dispositif de mesure de force conforme à l'une des revendications 1 ou 2, **caractérisé en ce que** les créneaux (18) sont parallèles à ladite membrane (12).

4. Dispositif de mesure de force conforme à l'une des revendications 1 à 3, **caractérisé en ce qu'**il comprend des créneaux (19) débouchant à la fois dans une paroi longitudinale de la tige (10) et dans une face de l'extrémité libre (10a) de la tige (10).

5. Dispositif de mesure de force conforme à l'une des revendications 1 à 4, **caractérisé en ce que** les créneaux (17, 17', 18, 19) sont répartis symétriquement par rapport à l'axe central longitudinal de la tige (10).

6. Dispositif de mesure de force conforme à la revendication 2, **caractérisé en ce que** les créneaux (17') sont des cercles concentriques débouchant dans une face de l'extrémité libre (10a) de la tige (10).

7. Dispositif de mesure de force conforme à l'une des revendications 1 à 6, **caractérisé en ce que** les moyens d'ancrage sont formés en outre par une portion élargie (10c) de ladite tige (10).

8. Dispositif de mesure de force conforme à la revendication 7, **caractérisé en ce que** ladite portion élargie (10c) a une forme de tronc de cône, la base élargie du tronc de cône constituant une extrémité libre (10a) de ladite tige (10).

9. Dispositif de mesure de force conforme à l'une des revendications 1 à 8, **caractérisé en ce que** ladite portion de tige est adaptée à être noyée dans ledit élément (20).

10. Dispositif de mesure de force conforme à l'une des revendications 1 à 8, **caractérisé en ce que** ladite portion de tige (10) est adaptée à être emboîtée dans ledit élément (20).

## Claims

1. Force measuring device comprising a rigid stem (10) connected to a substantially plane deformable membrane (12) including means (16) for detecting a deformation of said membrane (12), the stem including at least a portion adapted to be in contact with an element (20, 21) that can be loaded by said force (F), **characterised in that** said stem portion (10) includes slots forming anchor means (17, 17', 18, 19) adapted to cooperate with said element (20, 21).

2. Force measuring device according to claim 1, **characterised in that** the slots (17, 17') are perpendicular to the membrane (12).

3. Force measuring device according to either of claims 1 or 2, **characterised in that** the slots (18) are parallel to said membrane (12).

4. Force measuring device according to any one of claims 1 to 3, **characterised in that** it comprises slots (19) opening both onto a longitudinal wall of the stem (10) and onto a face of the free end (10a) of the stem (10).

5. Force measuring device according to any one of claims 1 to 4, **characterised in that** the slots (17, 17', 18, 19) are distributed symmetrically with respect to the central longitudinal axis of the stem (10).

6. Force measuring device according to claim 2, **characterised in that** the slots (17') are concentric circles opening onto a face of the free end (10a) of the stem (10).

7. Force measuring device according to any one of claims 1 to 6, **characterised in that** the anchor means are further formed by an enlarged portion (10c) of said stem (10).

8. Force measuring device according to claim 7, **characterised in that** said enlarged portion (10c) has a frustoconical shape, the enlarged base of the frustum constituting a free end (10a) of said stem (10).

9. Force measuring device according to any one of claims 1 to 8, **characterised in that** said stem portion is adapted to be buried in said element (20).

10. Force measuring device according to one of claims 1 to 8, **characterised in that** said stem portion (10) is adapted to be nested in said element (20).

## Patentansprüche

1. Kraftmessvorrichtung, umfassend einen starren Schaft (10), der mit einer im Wesentlichen ebenen verformbaren Membran (12) verbunden ist, die Mittel (16) zur Erfassung einer Verformung der Membran (12) umfasst, wobei der Schaft mindestens einen Teil umfasst, der dafür ausgelegt ist, mit einem Element (20, 21) in Kontakt zu sein, das durch diese Kraft (F) beaufschlagt werden kann, **dadurch gekennzeichnet, dass** dieser Schaftteil (10) Verankerungsmittel bildende Schlitze (17, 17',18, 19) umfasst, die dafür ausgelegt sind, mit dem Element (20, 21) zusammenzuwirken.

2. Kraftmessvorrichtung nach Anspruch 1, **dadurch gekennzeichnet, dass** die Schlitze (17, 17') zur Membran (12) senkrecht sind.

3. Kraftmessvorrichtung nach einem der Ansprüche 1 oder 2, **dadurch gekennzeichnet, dass** die Schlitze (18) zur Membran (12) parallel sind.

4. Kraftmessvorrichtung nach einem der Ansprüche 1 bis 3, **dadurch gekennzeichnet, dass** sie Schlitze (19) umfasst, die gleichzeitig in einer Längswand des Schafts (10) und in einer freien Endwand (10a) des Schafts (10) ausmünden.

5. Kraftmessvorrichtung nach einem der Ansprüche 1 bis 4, **dadurch gekennzeichnet, dass** die Schlitze (17, 17', 18, 19) bezüglich der Mittellängsachse des Schafts (10) symmetrisch verteilt sind.

6. Kraftmessvorrichtung nach Anspruch 2, **dadurch gekennzeichnet, dass** die Schlitze (17') konzentrische Kreise sind, die in einer freien Endwand (10a) des Schafts (10) ausmünden.

7. Kraftmessvorrichtung nach einem der Ansprüche 1 bis 6, **dadurch gekennzeichnet, dass** die Verankerungsmittel außerdem von einem verbreiterten Teil (10c) des Schafts (10) gebildet sind.

8. Kraftmessvorrichtung nach Anspruch 7, **dadurch gekennzeichnet, dass** der verbreiterte Teil (10c) eine Kegelstumpfform besitzt, wobei die verbreiterte Basis des Kegelstumpfs ein freies Ende (10a) des Schafts (10) bildet.

9. Kraftmessvorrichtung nach einem der Ansprüche 1 bis 8, **dadurch gekennzeichnet, dass** der Schaftteil dafür ausgelegt ist, in das Element (20) eingelassen zu sein.

10. Kraftmessvorrichtung nach einem der Ansprüche 1 bis 8, **dadurch gekennzeichnet, dass** der Schaftteil (10) dafür ausgelegt ist, in das Element (20) eingesteckt zu werden.
